# EUROPEAN PATENT SPECIFICATION

(11) **EP 3 626 550 B1**
(45) Date of publication and mention of the grant of the patent: **14.09.2022**
(21) Application number: 18195243.3
(22) Date of filing: 18.09.2018
(51) Int. Cl.: B60S 1/54, B60S 1/56, G02B 27/00

(54) **SENSOR CLEANING SYSTEM FOR ENVIRONMENT SENSORS OF A VEHICLE**
SENSORREINIGUNGSSYSTEM FÜR UMGEBUNGSSENSOREN EINES FAHRZEUGS
SYSTÈME DE NETTOYAGE POUR CAPTEURS D'ENVIRONNEMENT D'UN VÉHICULE

(43) Date of publication of application: 25.03.2020
(73) Proprietor: KNORR-BREMSE Systeme für Nutzfahrzeuge GmbH, 80809 München (DE)
(72) Inventor: SZÖLLOSI, Adam, 1119 Budapest (HU); NEMETH, Huba, 1116 Budapest (HU); TIHANYI, Viktor, 1032 Budapest (HU); GAL, Balazs, 1036 Budapest (HU); ANDRAS, Szappanos, 2093 Budajeno (HU); DANOS, Laszlo, 7621 Pécs (HU)
(74) Representative: Prüfer & Partner mbB Patentanwälte · Rechtsanwälte

(56) References cited:
- WO-A1-2015/161097
- DE-A1-102015 007 794
- US-A1- 2015 296 108
- US-A1- 2016 311 405
- US-A1- 2016 375 876
- US-A1- 2018 015 908
- US-B2- 10 059 280

## Description

The invention relates to a sensor cleaning system for environment sensors, in particular, to a sensor cleaning system for environment sensors of a vehicle.

An autonomous operation of transport vehicles is a new field of inventions. Highly sophisticated functions require high-end hardware infrastructure including different types of camera sensors and perception technologies. But a contamination of a lens of the camera sensors degrades the quality of a camera image and its detection performance.

The cameras in a cab behind a windscreen are less sensitive for the contamination. However, in particular, down looking wide-angle cameras and side or rear looking cameras must be equipped to an external part of the vehicle. Therefore, these environment sensors are exposed to dust and dirt and there is a risk of soiling so that a reliable function of the environment sensors cannot be ensured.

Document US 10,059,280 B2 discloses a sensor system for detecting environmental conditions of a vehicle, comprising a camera as an environment sensor and a sensor cleaning system comprising a compressed air supply line connectable to a compressed air network of the vehicle. In document US 2016/0311405 A1, a vehicle camera cleaning system having a controller to detect a pollution of the camera based on camera data is disclosed. This document discloses the preamble of claim 1.

The object underlying the invention is to provide a system maintaining a reliable function of the environment sensors.

The object is achieved by a sensor system of claim 1 and a vehicle of claim 6.

According to the invention, a sensor cleaning system for environment sensors of a vehicle comprises a compressed air supply line which is connectable to a compressed air network of the vehicle, and the sensor cleaning system is configured to use compressed air supplied by the compressed air supply line as a cleaning medium.

By such a sensor cleaning system, the environment sensors can be cleaned in a cost-effective way since compressed air is an inexpensive cleaning medium, in particular, when the compressed air is provided by a compressed air network which anyway exists in a commercial vehicle.

According to the invention, the sensor cleaning system comprises a nozzle configured to jet the compressed air to a respective environment sensor.

By the use of a nozzle, characteristics of an air jet directed to the respective environment sensor can be optimized to provide an effective and reliable cleaning of the environment sensor.

In a further advantageous implementation of the sensor cleaning system, the nozzle comprises an interface so that the nozzle is configured to be interchangeable.

By the interchangeability of the nozzle, a nozzle optimized for a specific case of application, e.g. a type of contamination, can be initially selected and, in case of damage, the nozzle can easily be replaced.

In a further advantageous implementation of the sensor cleaning system, the compressed air is configured to include water.

Due to the water included in the compressed air, a cleanability of the cleaning medium, in particular in case of moist dirt, is improved.

In another advantageous implementation of the sensor cleaning system, the compressed air is configured to include a washing liquid.

When the washing liquid is included in the compressed air, a cleanability of the cleaning medium, in particular in case of oily dirt, is improved.

According to the invention, the sensor cleaning system comprises a controller for controlling cleaning of a specific environment sensor and the controller is configured to detect a contamination of the environment sensors by a computer algorithm based on raw sensor data.

By providing the controller and detecting the contamination of the environment sensors by the computer algorithm based on the raw sensor data, the specific environment sensor can be cleaned at a time at which a soiling of the specific environment sensor exceeds beyond a defined limit, which can be detected by the raw sensor data. Then, the environment sensor can be cleaned until the controller recognizes that the pollution is below a further defined limit by evaluating the raw sensor data.

According to the invention, a sensor system for detecting environmental conditions of a vehicle comprises an environment sensor and a sensor cleaning system, wherein the sensor is at least one of a camera device, a Lidar device, a Lidar scanner device, a radar device and a ultrasonic sensor device.

By the use of the sensor system including a specific environment sensor and the sensor cleaning system, the system can be optimized for a respective task and its reliability can be maintained due to the cleaning of the environment sensor. When different sensors are used for observing a same portion of environments of the vehicle, the reliability can further be improved since this portion of environments of the vehicle is observed in a redundant manner and a risk that two different environment sensors are damaged due to one occurring environment influence is low.

In an advantageous implementation of the sensor system, the environment sensor has a field of view, and the nozzle is configured to be arranged outside the field of view.

Due to the arrangement of the nozzle outside the field of view of the environment sensor, an observation of the portion of environments of the vehicle is not disturbed and obstacles can be recognized in a reliable manner.

In a further advantageous implementation of the sensor system, the environment sensor has a wide-opening field of view including a useful area for detection and an unusable area, and the nozzle is configured to be arranged in the unusable area.

In such a configuration, in particular in case of sensors having a large field of view, the nozzle can be positioned at a location which is favourable for cleaning the environment sensor, nevertheless, without disturbing observation of the portion of environments.

According to a further aspect of the invention, a vehicle comprising a compressed air network and a sensor system including a sensor cleaning system is provided, wherein the supply line of the sensor cleaning system is connected to the compressed air network.

When connecting the supply line of the sensor cleaning system to the compressed air network of the vehicle, a cost-effective, reliable supply of the sensor cleaning system is ensured.

Now, the invention is elucidated in detail by an embodiment referring to the attached drawing.

In particular,
- Fig. 1: shows a vehicle including a sensor system according to the invention; and
- Fig. 2: shows a sensor system including a sensor cleaning system for environment sensors and one of the environment sensors and a compressed air network of the vehicle.

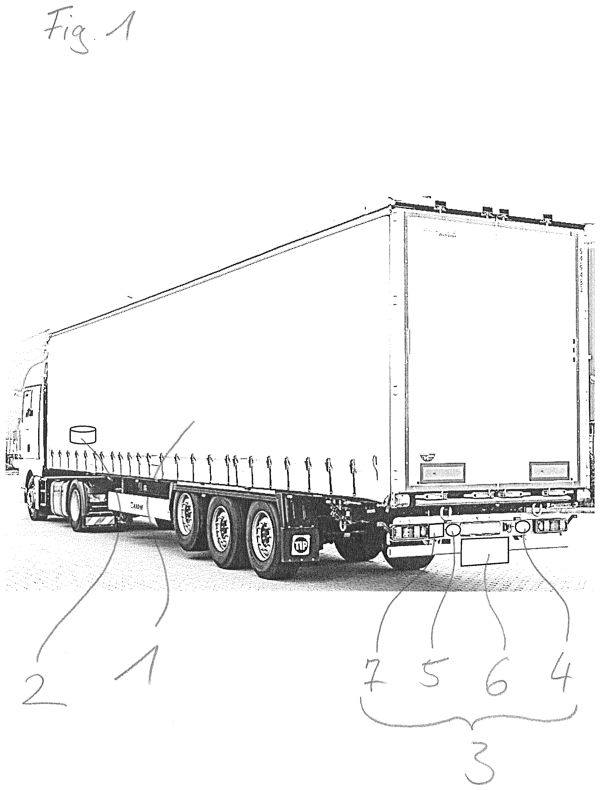

**Fig.** 1 shows a vehicle 1 including a sensor system 2 according to the invention.

The vehicle 1 is provided with several environment sensors 3. In particular, a camera device 4, a Lidar device 5, a radar device 6 and an ultrasonic device 7 are provided as the environment sensors 3 at a rear side of the vehicle 1. In alternative embodiments, merely some or one of the environment sensors are provided which can be placed at another location than at the rear side of the vehicle 1.

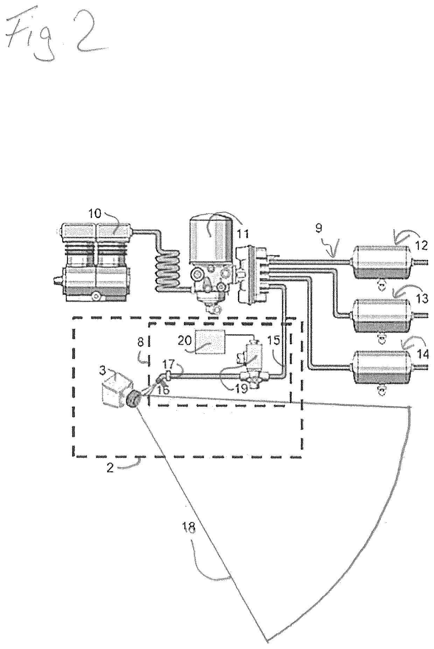

Fig. 2 shows the sensor system 2 including a sensor cleaning system 8 for environment sensors 3 and one of the environment sensors 3 and a compressed air network 9 of the vehicle 1.

The compressed air network 9 comprises a compressor 10 for providing compressed air, an air processing unit 11 for processing, i.e. cleaning and dehumidifying, the compressed air and three air reservoir circuits 12, 13, 14. Furthermore, the compressed air network 9 is provided with a line for supplying the compressed air to the sensor cleaning system 8.

The sensor system 2 for detecting environmental conditions of the vehicle 1 comprises the environment sensors 3 and the sensor cleaning system 8, wherein the environment sensors 3 are the camera device 4, the Lidar device 5, a Lidar scanner device, the radar device 6 and the ultrasonic sensor device 7, wherein, as mentioned above, alternatively, not all of the environment sensors 3 are obligatorily provided.

The sensor cleaning system 8 comprises a compressed air supply line 15 which is connectable to the compressed air network 9 of the vehicle 1 and the sensor cleaning system 8 is configured to use the compressed air as a cleaning medium. The air supply line 15 of the sensor cleaning system 8 is connected to the compressed air network 9 of the vehicle 1.

In this embodiment, the cleaning medium is the compressed air, however, in alternative embodiments, as the cleaning medium, the compressed air can include water or a washing liquid.

The sensor cleaning system 8 comprises a nozzle 16 configured to jet the compressed air to a respective environment sensor 3. The nozzle 16 comprises an interface 17 so that the nozzle 16 is configured to be interchangeable.

The environment sensor 3 has a field of view 18 and the nozzle 16 is configured to be arranged outside the field of view 18. In an alternative embodiment, the environment sensor 3 has a wide-opening field of view 18, as e.g. a fisheye lens, including a useful area for detection and an unusable area and the nozzle 16 is configured to be arranged in the unusable area.

Moreover, the sensor cleaning system 8 is provided with a solenoid valve 19 for opening and shutting off a line for supplying the cleaning medium to the nozzle 16 and, therefore, for jetting it to the environment sensor 3.

Furthermore, a controller 20 is provided in the vehicle 1. The controller 20 is connected to the sensor cleaning system 8, in particular, to the solenoid valve 19. The controller 20 can be included in the sensor cleaning system 8, it can be a controller separate from the sensor cleaning system 8, or it can be part of a vehicle controller. The controller 20 is configured to detect a pollution of a specific environment sensor 3 by a computer algorithm based on respective raw sensor data.

In use, a pollution of at least one of the environment sensors 3 is detected by the controller 20 by means of the computer algorithm based on the raw sensor data of the one of the environment sensors 3 and the opening of the solenoid valve 19 is initiated by the controller 20.

The compressed air, as the case may be including the water or the washing liquid, is jetted to the environment sensor 3. The cleaning is stopped after the controller 20 judges that the environment sensor 3 is clean due to the computer algorithm based on the raw sensor data or, which is not part of the invention, after a specific time.

Although the present invention has been described with reference to specific features and embodiments thereof, it is evident that various modifications and combinations can be made thereto without departing from the scope of the invention. The specification and drawings are, accordingly, to be regarded simply as an illustration of the invention as defined by the appended claims.

### REFERENCE SIGN LIST

- 1: vehicle
- 2: sensor system
- 3: environment sensor
- 4: camera device
- 5: Lidar device
- 6: radar device
- 7: ultrasonic device
- 8: sensor cleaning system
- 9: compressed air network
- 10: compressor
- 11: air processing unit
- 12: air reservoir circuit
- 13: air reservoir circuit
- 14: air reservoir circuit
- 15: compressed air supply line
- 16: nozzle
- 17: interface
- 18: field of view
- 19: solenoid valve
- 20: controller

## Claims

1. A sensor system (2) for detecting environmental conditions of a vehicle (1), comprising
an environment sensor (3), and
a sensor cleaning system (8) for environment sensors (3) of the vehicle (1), wherein
the sensor cleaning system (8) comprises a compressed air supply line (15) which is connectable to a compressed air network (9) of the vehicle (1),
the sensor cleaning system (8) comprises a nozzle (16) configured to jet the compressed air to a respective environment sensor (3),and
the sensor cleaning system (8) is configured to use compressed air supplied by the compressed air supply line as a cleaning medium, and
the environment sensor (3) is at least one of a camera device (4), a Lidar device (5), a Lidar scanner device, a radar device (6) and a ultrasonic sensor device (7),
wherein
the sensor cleaning system (8) is connected to a controller (20) for controlling cleaning of the environment sensors (3),
wherein the controller (20) is configured to detect a pollution of a specific environment sensor (3) by a computer algorithm based on raw sensor data of the environment sensor (3) and to initiate opening of a solenoid valve (19) for opening and shutting off a line for supplying the cleaning medium to the nozzle (16) and therefore, for jetting it to the environment sensor (3), **characterised in that** the controller is further configured to stop the cleaning by shutting off the solenoid valve (19) after it judges that the environment sensor (3) is clean due to the computer algorithm based on the raw sensor data.

2. The sensor system (2) of claim 1, wherein
the nozzle (16) comprises an interface (17) so that the nozzle (16) is configured to be interchangeable.

3. The sensor system (2) of anyone of the preceding claims, wherein
the compressed air is configured to include water.

4. The sensor system (2) of anyone of the preceding claims, wherein
the compressed air is configured to include a washing liquid.

5. The sensor system (2) of anyone of the preceding claims, wherein
the environment sensor (3) has a field of view (18), and
the nozzle (16) is configured to be arranged outside the field of view (18).

6. A vehicle (1) comprising a compressed air network (9) and a sensor system (2) of anyone of the preceding claims, wherein
the compressed air supply line (15) of the sensor cleaning system (8) is connected to the compressed air network (9).

## Patentansprüche

1. Sensorsystem (2) zum Erkennen von Umgebungsbedingungen eines Fahrzeugs (1), umfassend
einen Umgebungssensor (3) und
ein Sensorreinigungssystem (8) für Umgebungssensoren (3) des Fahrzeugs (1), wobei
das Sensorreinigungssystem (8) eine Druckluftzufuhrleitung (15) umfasst, die mit einem Druckluftnetz (9) des Fahrzeugs (1) verbunden werden kann,
wobei das Sensorreinigungssystem (8) eine Düse (16) umfasst, die ausgelegt ist, um die Druckluft auf einen jeweiligen Umgebungssensor (3) zu strahlen, und
das Sensorreinigungssystem (8) ausgelegt ist, um Druckluft, die von der Druckluftzufuhrleitung zugeführt wird, als Reinigungsmittel zu verwenden, und
der Umgebungssensor (3) mindestens eines ist von einer Kameravorrichtung (4), einer Lidar-Vorrichtung (5), einer Lidar-Scannervorrichtung, einer Radar-Vorrichtung (6) und einer Ultraschallsensor-Vorrichtung (7), wobei
das Sensorreinigungssystem (8) mit einer Steuerung (20) zum Steuern von Reinigung der Umgebungssensoren (3) verbunden ist, wobei
die Steuerung (20) ausgelegt ist, um eine Verunreinigung eines konkreten Umgebungssensors (3) anhand eines Computeralgorithmus zu erkennen, der auf Sensoren-Rohdaten des Umgebungssensors (3) basiert, und Öffnen eines Magnetventils (19) zum Öffnen und Schließen einer Leitung zum Zuführen des Reinigungsmittels zu der Düse (16) zu initiieren und es damit auf den Umgebungssensor (3) zu strahlen, **dadurch gekennzeichnet, dass** die Steuerung weiter ausgelegt ist, um Reinigen durch Schließen des Magnetventils (19) zu beenden, nachdem sie aufgrund des Computeralgorithmus, der auf den Sensoren-Rohdaten beruht, beurteilt, dass der Umgebungssensor (3) sauber ist.

2. Sensorsystem (2) nach Anspruch 1, wobei
die Düse (16) eine Schnittstelle (17) umfasst, so dass die Düse (16) ausgelegt ist, um austauschbar zu sein.

3. Sensorsystem (2) nach einem der vorstehenden Ansprüche, wobei die Druckluft ausgelegt ist, um Wasser einzuschließen.

4. Sensorsystem (2) nach einem der vorstehenden Ansprüche, wobei die Druckluft ausgelegt ist, um eine Waschflüssigkeit einzuschließen.

5. Sensorsystem (2) nach einem der vorstehenden Ansprüche, wobei
der Umgebungssensor (3) ein Blickfeld (18) aufweist und
die Düse (16) ausgelegt ist, um außerhalb des Blickfelds (18) angeordnet zu sein.

6. Fahrzeug (1), das ein Druckluftnetz (9) und ein Sensorsystem (2) nach einem der vorstehenden Ansprüche umfasst, wobei
die Druckluftzufuhrleitung (15) des Sensorreinigungssystems (8) mit dem Druckluftnetz (9) verbunden ist.

## Revendications

1. Système de détecteur (2) pour la détection de conditions environnementales d'un véhicule (1), comprenant
un capteur environnemental (3), et
un système de nettoyage de capteur (8) pour des capteurs environnementaux (3) du véhicule (1), dans lequel
le système de nettoyage de capteur (8) comprend une ligne d'alimentation en air comprimé (15) qui
peut être reliée à un réseau d'air comprimé (9) du véhicule (1),
le système de nettoyage de capteur (8) comprend une buse (16) configurée pour éjecter l'air comprimé vers un capteur environnemental respectif (3), et
le système de nettoyage de capteur (8) est configuré pour utiliser de l'air comprimé fourni par la ligne d'alimentation en air comprimé comme un milieu de nettoyage, et
le capteur environnemental (3) est au moins un d'un dispositif de caméra (4), un dispositif Lidar (5), un dispositif de scanner Lidar, un dispositif radar (6) et un dispositif de capteur ultrasonique (7), dans lequel
le système de nettoyage de capteur (8) est relié à un dispositif de commande (20) pour la commande du nettoyage des capteurs environnementaux (3), dans lequel
le dispositif de commande (20) est configuré pour détecter une pollution d'un capteur environnemental spécifique (3) par un algorithme informatique sur la base de données de capteur brutes du capteur environnemental (3) et pour initier l'ouverture d'une valve solénoïde (19) pour l'ouverture et la fermeture d'une ligne pour l'alimentation en milieu de nettoyage de la buse (16) et par conséquent, pour son éjection vers le capteur environnemental (3), **caractérisé en ce que** le dispositif de commande est en outre configuré pour arrêter le nettoyage par la fermeture de la valve solénoïde (19) après avoir jugé que le capteur environnemental (3) est propre en raison de l'algorithme informatique sur la base des données de capteur brutes.

2. Système de capteur (2) selon la revendication 1, dans lequel
la buse (16) comprend une interface (17) de sorte que la buse (16) soit configurée pour être interchangeable.

3. Système de capteur (2) selon l'une quelconque des revendications précédentes, dans lequel
l'air comprimé est configuré pour inclure de l'eau.

4. Système de capteur (2) selon l'une quelconque des revendications précédentes, dans lequel
l'air comprimé est configuré pour inclure un liquide de lavage.

5. Système de capteur (2) selon l'une quelconque des revendications précédentes, dans lequel
le capteur environnemental (3) présente un champ de vision (18), et
la buse (16) est configurée pour être agencée en dehors du champ de vision (18).

6. Véhicule (1) comprenant un réseau d'air comprimé (9) et un système de capteur (2) selon l'une quelconque des revendications précédentes, dans lequel
la ligne d'alimentation en air comprimé (15) du système de nettoyage de capteur (8) est reliée au réseau d'air comprimé (9).
